# EUROPEAN PATENT SPECIFICATION

(11) **EP 4 541 691 B1**
(45) Date of publication and mention of the grant of the patent: **17.06.2026**
(21) Application number: 24205920.2
(22) Date of filing: 10.10.2024
(51) Int. Cl.: B62D 5/04

(54) **STEERING CONTROL DEVICE**
LENKSTEUERVORRICHTUNG
DISPOSITIF DE COMMANDE DE DIRECTION

(30) Priority: 17.10.2023 JP 2023178758
(43) Date of publication of application: 23.04.2025
(73) Proprietor: JTEKT CORPORATION, Kariya-shi, Aichi-ken, 448-8652 (JP)
(72) Inventor: OKADA, Kotaro, Kariya-shi, Aichi-ken,, 448-8652 (JP); ITAZURI, Kazuki, Toyota-shi, Aichi-ken,, 471-8571 (JP)
(74) Representative: Winter, Brandl - Partnerschaft mbB

(56) References cited:
- JP-A- 2023 073 790

## Description

### BACKGROUND OF THE INVENTION

### 1. Field of the Invention

The present disclosure relates to a steering control device.

### 2. Description of Related Art

For example, Japanese Unexamined Patent Application Publication No. 2023-73790 describes a control device that corrects a target steering angle depending on a steering direction. In this device, in the case where a planned steering direction is a right steering direction, the target steering angle is corrected by a play amount that is a value for the right steering direction. The play amount is the maximum of an amount in which the turning angle of a turning wheel does not change even when the steering angle changes.

### SUMMARY OF THE INVENTION

In the case where the target steering angle is corrected as described above, there is fear that an appropriate manipulated variable cannot be calculated because a target value deviates from a turning angle of the turning wheel that is intended to be actually controlled. Specifically, for example, in the case where a manipulated variable for a feedforward control is calculated depending on the target steering angle, there is fear that the magnitude of the manipulated variable becomes excessive. The present disclosure provides a steering control device that improves the controllability of the turning angle.

A steering control device according to an aspect of the present disclosure is a steering control device that controls a steering device. The steering device includes a steering shaft, a turning wheel of a vehicle, the turning wheel turning with rotation of the steering shaft, and a motor that is configured to rotate the steering shaft. The steering device includes a processor configured to execute a dead band amount calculation process and a superposition process. The dead band amount calculation process is a process of calculating a dead band amount using a steering angle as an input, the dead band amount being an amount by which the steering angle changes while the turning wheel does not turn in a steering direction. The steering angle is a rotation angle of the steering shaft. The superposition process is a process of superposing a dead band compensation torque on the torque of the motor, when the magnitude of the dead band amount is larger than zero. The dead band compensation torque is a torque that increases the torque of the motor in a direction in which the turning wheel turns depending on the rotation of the steering shaft.

In the above configuration, in the case where the dead band amount is larger than zero, the dead band compensation torque is superposed on the torque of the motor. Accordingly, by the design of the dead band compensation torque, it is possible to compensate for the decrease in the responsiveness of the turning angle due to the dead band amount other than zero. Therefore, it is possible to more directly compensate for the decrease in the responsiveness of the turning angle due to the dead band amount other than zero, compared to the case where the target value of the turning angle is corrected, and therefore, it is possible to improve the controllability of the turning angle.

In the steering control device according to the aspect of the present disclosure, the superposition process may include a dead band compensation torque calculation process. The dead band compensation torque calculation process may be a process of altering the magnitude of the dead band compensation torque depending on the dead band amount, on condition that the magnitude of the dead band compensation torque when the magnitude of the dead band amount is large is equal to or more than the magnitude of the dead band compensation torque when the magnitude of the dead band amount is small.

In the above configuration, the magnitude of the dead band compensation torque is altered depending on the magnitude of the dead band amount, and thereby, it is possible to adjust the dead band compensation torque to a value that is more appropriate to improve the controllability of the turning angle, compared to the case where the magnitude of the dead band compensation torque is fixed.

The steering control device according to the aspect of the present disclosure may further include a storage device in which a dead band width is stored for each of different vehicle velocities from each other. The dead band width may be an amount by which the steering angle changes after a rotation direction of the steering shaft switches from one of a right-turn direction and a left-turn direction to the other of the right-turn direction and the left-turn direction and before the turning wheel turns. The dead band compensation torque calculation process may include a dead band width selection process. The dead band width selection process may a process of selecting the dead band width that is of a plurality of the dead band widths stored in the storage device depending on the vehicle velocities and that corresponds to the vehicle velocity. The dead band compensation torque calculation process may a process of altering the magnitude of the dead band compensation torque depending on the ratio of the dead band amount to the dead band width selected by the dead band width selection process, on condition that the magnitude of the dead band compensation torque when the magnitude of the ratio is large is equal to or more than the magnitude of the dead band compensation torque when the magnitude of the ratio is small.

The dead band width can change depending on the vehicle velocity. Hence, in the above configuration, the magnitude of the dead band compensation torque is altered depending on the magnitude of the ratio of the dead band amount to the dead band width. Thereby, it is possible to fix the maximum of the magnitude of the dead band compensation torque, even when the dead band width changes depending on the vehicle velocity.

In the steering control device according to the aspect of the present disclosure, the dead band amount calculation process may include a steering direction determination process. The steering direction determination process may be a process of determining whether the steering direction is a right-turn direction or a left-turn direction, based on a change direction of a target value of a turning angle. The dead band amount calculation process may be a process of calculating the dead band amount in accordance with the steering direction determined by the steering direction determination process.

In the above configuration, the dead band amount is calculated depending on the change in the target value. Therefore, it is possible to superpose a dead band compensation torque that is appropriate to improve the controllability of the turning angle for the target value.

In the steering control device according to the aspect of the present disclosure, the dead band amount calculation process may include a steering direction determination process. The steering direction determination process may be a process of determining whether the steering direction is a right-turn direction or a left-turn direction, based on the sign of the difference between a target value of a turning angle and the turning angle. The dead band amount calculation process may be a process of calculating the dead band amount in accordance with the steering direction determined by the steering direction determination process.

In the above configuration, the dead band amount is calculated depending on the sign of the difference between the target value and the turning angle. Therefore, it is possible to superpose a dead band compensation torque that is appropriate to improve the controllability of the turning angle for the target value.

In the steering control device according to the aspect of the present disclosure, the processor may be configured to execute a turning process. The turning process may be a process of manipulating the torque of the motor depending on a manipulated variable for a feedback control in which a turning angle of the turning wheel is a controlled variable and a target value of the turning angle is a target value of the controlled variable. The superposition process may be a process of superposing the dead band compensation torque on a torque depending on the manipulated variable.

In the above configuration, by superposing the dead band compensation torque, it is possible to add a feedforward control depending on the dead band, to the feedback control. Therefore, it is possible to enhance the responsiveness of the turning angle, compared to the case of only the feedback control.

The steering control device according to the aspect of the present disclosure may further include a storage device in which a stiffness coefficient is stored for each of different vehicle velocities from each other. The stiffness coefficient may be the ratio of the turning angle to the steering angle. The processor may be configured to execute a stiffness coefficient selection process and a turning angle acquisition process. The stiffness coefficient selection process is a process of selecting the stiffness coefficient that is of a plurality of the stiffness coefficients stored in the storage device depending on the vehicle velocities and that corresponds to the vehicle velocity.

The stiffness coefficient changes depending on the vehicle velocity. Hence, in the above configuration, it is possible to estimate the turning angle with high accuracy, by using the stiffness coefficient depending on the vehicle velocity.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing the configuration of a steering system according to a first embodiment;
FIG. 2 is a diagram showing the relation between the steering angle and turning angle in the steering system shown in FIG. 1;
FIG. 3 is a block diagram showing processes that are executed by a steering control device shown in FIG. 1;
FIG. 4 is a flowchart showing a procedure of a process that is executed by the steering control device shown in FIG. 1;
FIG. 5 is a flowchart showing a procedure of a process that is executed by the steering control device shown in FIG. 1;
FIG. 6 is a diagram exemplifying a part of the process shown in FIG. 5;
FIG. 7 is a flowchart showing a procedure of a process that is executed by the steering control device shown in FIG. 1;
FIG. 8 is a flowchart showing a procedure of a process that is executed by the steering control device shown in FIG. 1;
FIG. 9 is a flowchart showing a procedure of a process that is executed by the steering control device shown in FIG. 1;
FIG. 10 is a time chart exemplifying a process that is executed by the steering control device shown in FIG. 1; and
FIG. 11 is a flowchart showing a procedure of a process that is executed by a steering control device according to a second embodiment.

### DETAILED DESCRIPTION OF EMBODIMENTS

### First Embodiment

A first embodiment will be described below with reference to the drawings.

### Premise Configuration

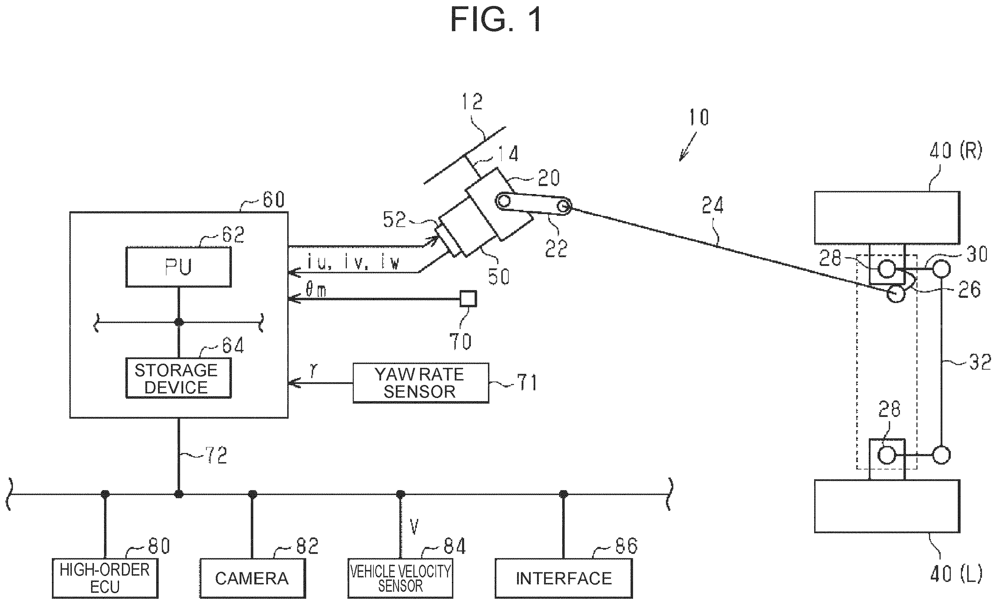

A steering device 10 shown in FIG. 1 includes a steering wheel 12. A steering shaft 14 is coupled to the steering wheel 12. An end portion of the steering shaft 14 on the opposite side of the steering wheel 12 is coupled to a steering gearbox 20. A sector shaft of the steering gearbox 20 is coupled to one end portion of the pitman arm 22. The other end portion of the pitman arm 22 is coupled to one end portion of a drag link 24. The other end portion of the drag link 24 is coupled to one end portion of a knuckle arm 26. The other end portion of the knuckle arm 26 is coupled to a kingpin shaft 28 of a right turning wheel 40(R). The kingpin shaft 28 of the right turning wheel 40(R) and a kingpin shaft 28 of a left turning wheel 40(L) are coupled by a tie rod arm 30 and a tie rod 32.

The rotation power of the motor 50 is transmitted to the steering shaft 14. As an example, the motor 50 is a synchronous electric motor. The output voltage of an inverter 52 is applied to terminals of the motor 50.

The steering control device 60 includes a PU 62 and a storage device 64. The PU 62 is a software processing device such as a CPU, a GPU, and a TPU. The storage device 64 may be a nonvolatile memory in which electric rewriting is impossible. Further, the storage device 64 may be a nonvolatile memory in which electric rewriting is possible, or a storage medium such as a disk medium. The PU 62 executes programs stored in the storage device 64, and thereby, the steering control device 60 executes processes for controlling a controlled object.

The controlled object of the steering control device 60 is the steering device 10. For the control of the controlled object, the steering control device 60 refers to a rotation angle θm of the motor 50 that is detected by a rotational angle sensor 70. Further, the steering control device 60 refers to a yaw rate γ that is detected by a yaw rate sensor 71. Further, the steering control device 60 refers to electric currents iu, iv, iw that flow through the terminals of the motor 50. For example, the electric currents iu, iv, iw may be detected as voltage drop amounts at shunt resistors provided on legs of the inverter 52. The steering control device 60 refers to a vehicle velocity V that is detected by a vehicle velocity sensor 84, through a network 72.

The steering control device 60 can communicate with a high-order ECU 80 through the network 72. The high-order ECU 80 executes a process of generating a command for intervening in the steering of the vehicle, independently from the instruction of the steering due to the operation of the steering wheel 12. In other words, the high-order ECU 80 executes an autonomous steering process. For executing the autonomous steering process, the high-order ECU 80 acquires image data about the periphery of the vehicle that is photographed by a camera 82. Further, the high-order ECU 80 knows, for example, an intention indication that is relevant to the execution of the autonomous steering process and that is input through an interface 86 by a driver.

### Characteristic of Steering Device 10

The above-described steering device 10 includes a complex link mechanism, and therefore, a so-called play in which the turning wheel 40 does not rotate in response to the rotation of the steering shaft 14 is large.

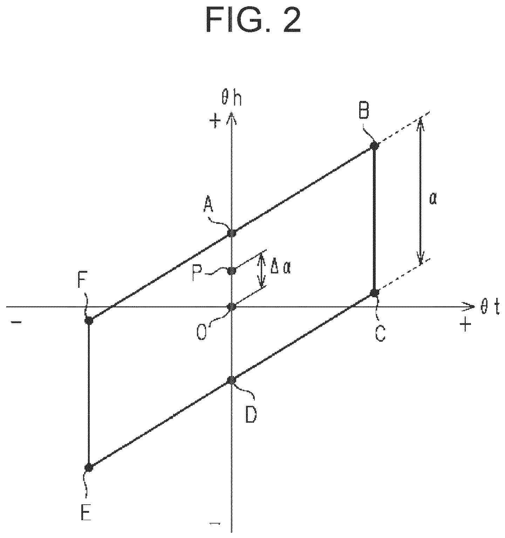

FIG. 2 shows the relation between a steering angle θh and a turning angle θt. The steering angle θh is the rotation angle of the steering shaft 14. On the other hand, the turning angle θt is the moving angle of a tire relevant to the turning wheel 40. Further, a neutral position O described in FIG. 2 is a point at which both of the steering angle θh and the turning angle θt are zero. This means that both of the steering angle θh and the turning angle θt indicate a straight movement direction. Hereinafter, it is assumed that a rotational angle in a right-turn direction is positive and a rotational angle in a left-turn direction is negative.

As shown in FIG. 2, even when the steering angle θh is changed from the neutral position O in the right-turn direction, the turning angle θt does not change until the steering angle θh reaches a point A. Then, when the steering angle θh becomes a further larger value than the point A, the turning angle θt increases.

Further, even when the steering angle θh is decreased at a point B, the turning angle θt does not change. In other words, even when a steering direction is switched to the left side at the point B, the turning angle θt does not change. The steering direction is the rotation direction of the steering shaft 14. Then, when the steering angle θh becomes a further small value beyond a point C, the turning angle θt decreases.

Then, at a point D, the turning angle θt becomes zero. A point E is a value that is obtained by further displacing the steering angle θh in the left-turn direction after the turning angle θt becomes zero. Even when the steering angle θh is increased at the point E, the turning angle θt does not change until the steering angle θh reaches a point F. When the steering angle θh becomes further large beyond the point F, the turning angle θt increases.

In this way, in the case of being at the point B, the turning angle θt does not change even when the steering angle θh changes between the point B and the point C. Further, for example, in the case of being at the point E, the turning angle θt does not change even when the steering angle θh changes between the point E and the point F. In this way, there is a dead band region that is a region where the turning angle θt does not change in response to the change in the steering angle θh, due to the play of the steering device 10. The dead band region is not a region that includes fixed values of the steering angle θh, and is a region that can change depending on the history of the change in the steering angle θh.

The displacement of the steering angle θh from the point B to the point C occurs in the switch-back from the right turn. Further, the displacement of the steering angle θh from the point E to the point F occurs in the switch-back from the left turn. A dead band width α shown in FIG. 2 is the length of the dead band region where the turning angle θt does not change in response to the change in the steering angle θh at the time of the switch-back from the right turn or the left turn.

### Overview of Control of Steering Control Device

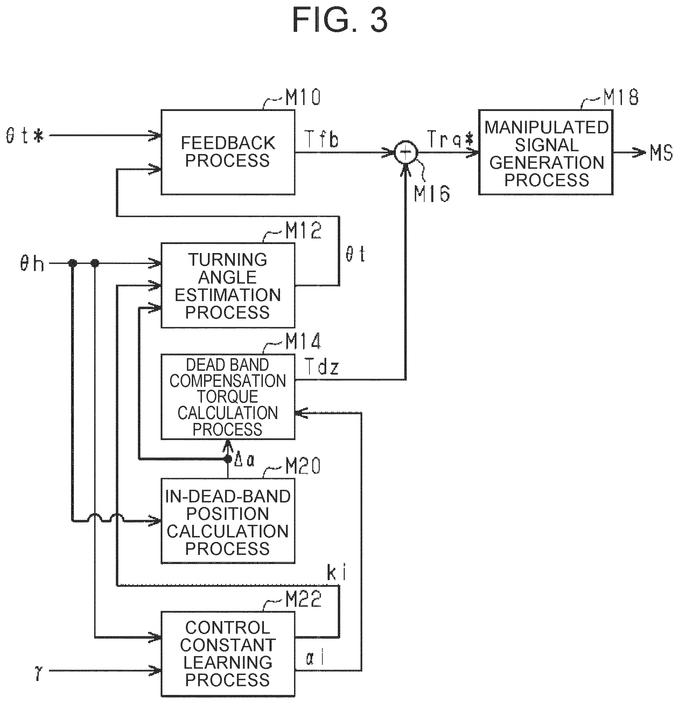

FIG. 3 shows some of processes that are executed by the steering control device 60. The process shown in FIG. 3 is realized when the PU 62 repeatedly executes programs stored in the storage device 64, for example, with a predetermined period.

A feedback process M10 is a process in which a target turning angle θt* and the turning angle θt are adopted as inputs and a feedback manipulated variable Tfb is adopted as an output. The feedback manipulated variable Tfb is a manipulated variable for a feedback control for which the turning angle θt is a controlled variable and the target turning angle θt* is a target value of the controlled variable. The target turning angle θt* is calculated by the high-order ECU 80. When an autonomous driving mode is selected by the operation of the interface 86, the high-order ECU 80 calculates a target locus along which the vehicle should travel, based on the image data about the periphery of the vehicle from the camera 82. Then, the high-order ECU 80 calculates the target turning angle θt* such that the actual traveling path of the vehicle gets close to the target locus.

A turning angle estimation process M12 is a process in which the steering angle θh is adopted as an input and the turning angle θt is adopted as an output. The turning angle θt is an estimated value. The steering angle θh is calculated by the PU 62, by the integration process of the rotation angle θm.

A dead band compensation torque calculation process M14 is a process in which a dead band compensation torque Tdz that is a manipulated variable for a feedforward control in the dead band region is adopted as an output. An addition process M16 is a process of assigning the sum of the feedback manipulated variable Tfb and the dead band compensation torque Tdz, to a torque command value Trq*. The torque command value Trq* is a command value of the torque of the motor 50. A manipulated signal generation process M18 is a process of generating a manipulated signal MS for such a control that the torque of the motor 50 gets close to the torque command value Trq* and outputting the manipulated signal MS to the inverter 52. The manipulated signal generation process M18 may be a process of causing the electric currents iu, iv, iw to get close to an electric current command value depending on the torque command value Trq*.

An in-dead-band position calculation process M20 is a process of calculating an in-dead-band position Δα that is a variable indicating a position in the dead band region shown in FIG. 2. FIG. 2 exemplifies the in-dead-band position Δα when the combination of the steering angle θh and the turning angle θt is at a point P.

### Control Constant Learning Process M22

A control constant learning process M22 is a process of learning a control constant that is a constant indicating the rotational displacement of the turning wheel 40 with respect to the rotational displacement of the steering shaft 14.

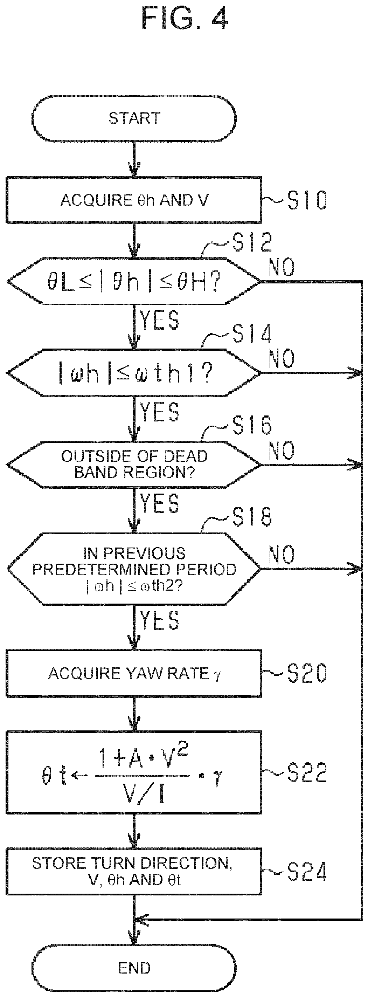

FIG. 4 shows a procedure of a preprocess for the control constant learning process M22. A sequence of processes shown in FIG. 4 is realized when the PU 62 repeatedly executes programs stored in the storage device 64, for example, with a predetermined period. Hereinafter, the step number of a process is expressed as a numeral that is prepended with "S".

In the sequence of processes shown in FIG. 4, the PU 62, first, acquires the steering angle θh and the vehicle velocity V (S10). Next, the PU 62 determines whether the absolute value of the steering angle θh is equal to or more than a learning minimum θL and is equal to or less than a learning maximum θH (S12). The learning minimum θL is set based on a lower limit of the steering angle θh that allows a later-described learning process to be accurately performed. Further, the learning maximum θH is set based on an upper limit of the steering angle θh that allows the later-described learning process to be accurately performed. In the setting of the learning maximum θH, it is considered that the driving of the vehicle is not stable in the case where the steering angle θh is excessively large.

In the case where the PU 62 determines that the above absolute value is equal to or more than the learning minimum θL and is equal to or less than the learning maximum θH (S12: YES), the PU 62 determines whether a condition that the absolute value of a steering angular velocity ωh is equal to or less than a threshold ωth1 is satisfied (S14). The steering angular velocity ωh is the change velocity of the steering angle θh. The PU 62 calculates the steering angular velocity ωh, using time-series data about the steering angle θh. The condition that the absolute value of the steering angular velocity ωh is equal to or less than the threshold ωth1 is one of execution conditions for the later-described learning process. This condition is a condition indicating that the steering angle θh is stable.

In the case where the PU 62 determines that the absolute value of the steering angular velocity ωh is equal to or less than the threshold ωth1 (S14: YES), the PU 62 determines whether the combination of the steering angle θh and the turning angle θt is outside of the dead band region (S16). An input in this process is the in-dead-band position Δα that is output by the in-dead-band position calculation process M20. In the case where the absolute value of the in-dead-band position Δα is less than "1/2" of a later-described dead band width αi, the PU 62 determines that the combination of the steering angle θh and the turning angle θt is in the dead band region.

In the case where the PU 62 determines that the combination of the steering angle θh and the turning angle θt is not in the dead band region (S16: YES), the PU 62 determines whether the following condition (A) is satisfied (S18).

Condition (A): a condition that the absolute value of the steering angular velocity ωh after a timing of a predetermined period before the present execution timing of the sequence of processes in FIG. 4 and before the current timing is equal to or less than a threshold ωth2.

In the case where the PU 62 determines that the condition (A) is satisfied (S18: YES), the PU 62 acquires the yaw rate γ (S20). Next, the PU 62 assigns a value resulting from multiplying the yaw rate γ by "(1 + A • V • V) / V / I", to the turning angle θt (S22). This process is a process in which the PU 62 estimates the turning angle θt based on the yaw rate γ. Here, a stability factor A and a wheelbase I are used.

Next, the PU 62 stores the turning angle θt estimated by the process of S22, in the storage device 64, in association with the turn direction, the vehicle velocity V, and the steering angle θh (S24). In the case where the PU 62 completes the process of S24 or in the case where the PU 62 makes the negative determination in the process of S12, S14, S16, or S18, the PU 62 ends the sequence of processes shown in FIG. 4 once.

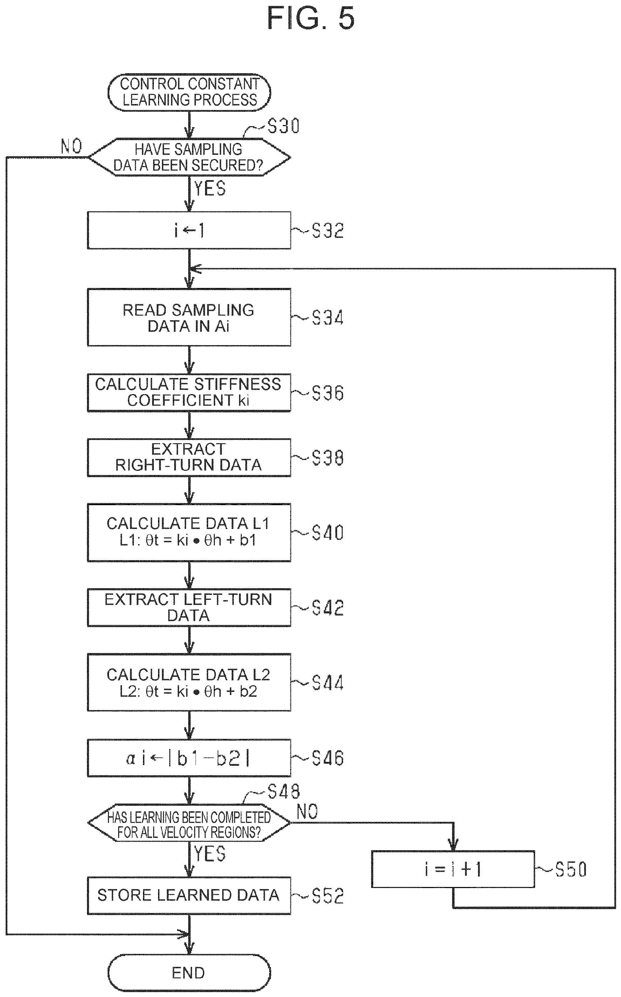

FIG. 5 shows a procedure of the control constant learning process M22. A sequence of processes shown in FIG. 5 is realized when the PU 62 repeatedly executes programs stored in the storage device 64, for example, with a predetermined period.

In the sequence of processes shown in FIG. 5, the PU 62 determines whether the data stored in the storage device 64 by the process of S24 has been secured to such an amount that a learning condition is satisfied (S30). As an example, the learning condition is a condition that the number of values stored by the process of S24 in each of the following states 1 to 4 is a predetermined number. A plurality of predetermined numbers may be adopted.

State 1: a state where the steering angle θh is equal to or more than the learning minimum θL and is equal to or less than the learning maximum θH when the steering direction is the right-turn direction.

State 2: a state where the steering angle θh is equal to or more than "-θH" and is equal to or less than "-θL" when the steering direction is the right-turn direction.

State 3: a state where the steering angle θh is equal to or more than the learning minimum θL and is equal to or less than the learning maximum θH when the steering direction is the left-turn direction.

State 4: a state where the steering angle θh is equal to or more than "-θH" and is equal to or less than "-θL" when the steering direction is the left-turn direction.

In the case where the PU 62 determines that the data has been secured to such an amount that the learning condition is satisfied (S30: YES), the PU 62 assigns "1" to a variable i that identifies the above data (S32). Next, the PU 62 reads data that is of the sampling data stored in the storage device 64 by the process of S24 and in which the vehicle velocity V is in a region Ai (S34). The region Ai shows one of regions A1, A2, ..., depending on the variable i. The regions A1, A2, ... are regions of the vehicle velocity V that are different from each other. For example, a region A3 is a region from 30 km/h to 40 km/h, and a region A4 is a region from 40 km/h to 50 km/h. Then, the PU 62 calculates a stiffness coefficient ki (S36). The stiffness coefficient is a coefficient that decides the ratio of the change amount of the turning angle θt to the change amount of the steering angle θh in the case where the combination of the steering angle θh and the turning angle θt is not in the dead band region.

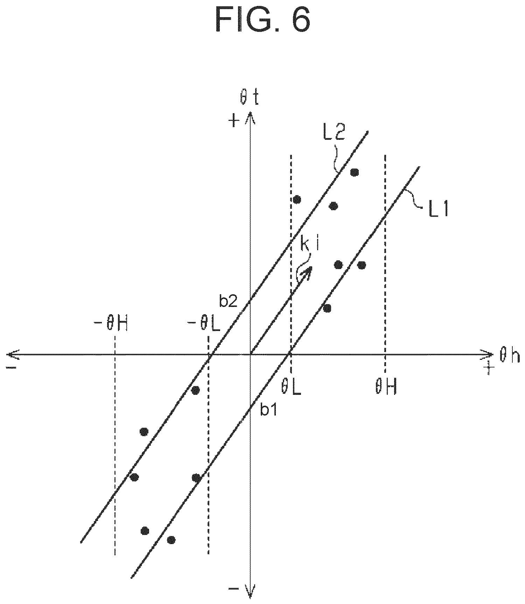

Each of black circles shown in FIG. 6 indicates the combination of the steering angle θh and the turning angle θt that is stored by the process of S24. As an example, the PU 62 evaluates a straight line that minimizes the deviation from a sampling point indicating the combination of the steering angle θh and the turning angle θt, using the least squares method. Then, the PU 62 assigns the slope of the straight line to the stiffness coefficient ki. The stiffness coefficient ki is a learning value when the vehicle velocity V is a value in the region Ai.

Back to FIG. 5, the PU 62 extracts data that is of the data read by the process of S34 and in which the steering direction is the right-turn direction (S38). Then, the PU 62 calculates a right-turn straight line L1 shown in FIG. 6, based on the data extracted by the process of S38 (S40). The right-turn straight line L1 is a straight line in which the slope is the stiffness coefficient ki calculated by the process of S36 and that has an intercept b1. The process of S40 is a process of evaluating the intercept b1 at which the difference between the extracted data and the right-turn straight line L1 is minimized. The right-turn straight line L1 is an approximation expression for approximating the relation between the steering angle θh and the turning angle θt when the steering direction is the right-turn direction.

Next, the PU 62 extracts data that is of the data read by the process of S34 and in which the steering direction is the left-turn direction (S42). Then, the PU 62 calculates a left-turn straight line L2, based on the data extracted by the process of S42 (S44). The left-turn straight line L2 is a straight line in which the slope is the stiffness coefficient ki calculated by the process of S42 and that has an intercept b2. The process of S44 is a process of evaluating the intercept b2 at which the difference between the extracted data and the left-turn straight line L2 is minimized. The left-turn straight line L2 is an approximation expression for approximating the relation between the steering angle θh and the turning angle θt when the steering direction is the left-turn direction.

Next, the PU 62 assigns the absolute value of the difference between the intercept b1 and the intercept b2, to the dead band width αi (S46). The dead band width αi is a learning value when the vehicle V is a value in the region Ai. Then, the PU 62 determines whether the learning of stiffness coefficients k1, k2, ... and dead band widths α1, α2, ... has been completed for all regions A1, A2, ... relevant to the vehicle velocity V (S48). In the case where the PU 62 determines that there is a region for which the learning has not been completed yet (S48: NO), the PU 62 increments the variable i (S50), and returns to the process of S34.

On the other hand, in the case where the PU 62 determines that the learning has been completed for all regions (S48: YES), the PU 62 stores the learned data in a predetermined region of the storage device 64 (S52). In the case where the PU 62 completes the process of S52 or in the case where the PU 62 makes the negative determination in the process of S30, the PU 62 ends the sequence of processes shown in FIG. 5 once.

Incidentally, before the completion of the above learning, the PU 62 uses preset default values as the stiffness coefficient ki and the dead band width αi. The default values are previously stored in the storage device 64. Further, a region A0 in which the vehicle velocity V is zero and that is not the learning object in the process in FIG. 6 may be provided. In that case, the learning of a dead band width α0 in the region A0 may be separately performed using the well-known art.

### Turning Angle Estimation Process

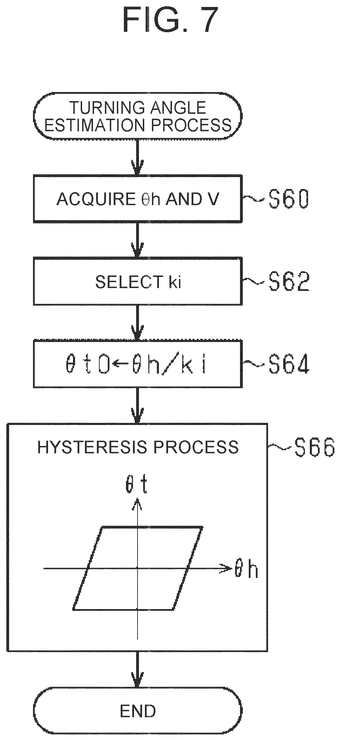

FIG. 7 shows a procedure of the turning angle estimation process M12. Processes shown in FIG. 7 are realized when the PU 62 repeatedly executes programs stored in the storage device 64, for example, with a predetermined period.

In the sequence of processes shown in FIG. 7, first, the PU 62 acquires the steering angle θh and the vehicle velocity V (S60). Next, the PU 62 selects the stiffness coefficient ki based on the vehicle velocity V acquired by the process of S60 (S62). For example, in the case where the vehicle velocity V is a value in the region A2, the PU 62 selects the stiffness coefficient k2.

Next, the PU 62 assigns a value resulting from dividing the steering angle θh by the stiffness coefficient ki, to a turning angle θt0 (S64). Next, the PU 62 calculates the turning angle θt by correcting the turning angle θt0 when appropriate (S66). That is, in the case where the turning angle θt0 is in the dead band region, the PU 62 assigns the last value of the turning angle θt to the turning angle θt. On the other hand, in the case where the turning angle θt0 is not in the dead band region, the PU 62 assigns a value resulting from adding the difference between the current value of the turning angle θt0 and the last value of the turning angle θt to the last value of the turning angle θt, to the current value of the turning angle θt. Whether the turning angle θt0 is in the dead band region is determined based on whether the magnitude of the in-dead-band position Δα calculated by the in-dead-band position calculation process M20 is smaller than "1/2" of the dead band width αi. That is, in the process of S66, the in-dead-band position Δα is adopted as an input.

In the case where the PU 62 completes the process of S66, the PU 62 ends the sequence of processes shown in FIG. 7 once.

### In-Dead-Band Position Calculation Process M20

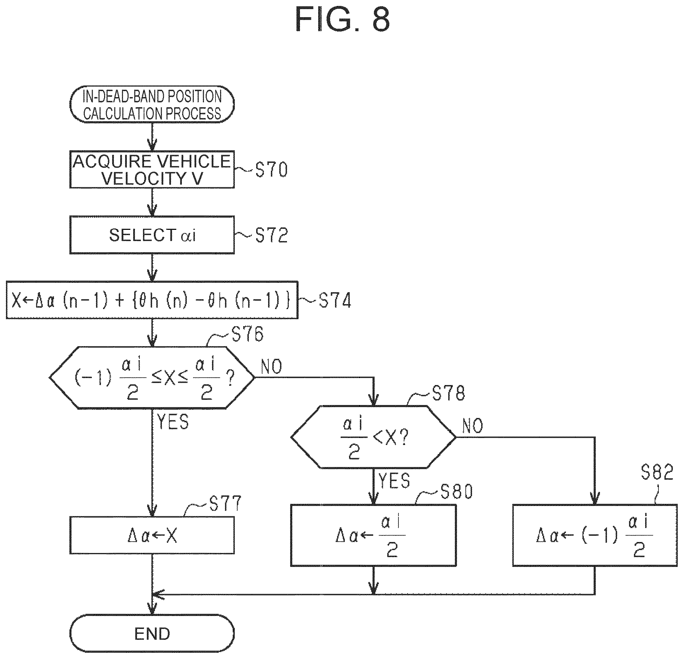

FIG. 8 shows a procedure of the in-dead-band position calculation process M20. Processes shown in FIG. 8 are realized when the PU 62 repeatedly executes programs stored in the storage device 64, for example, with a predetermined period.

In the sequence of processes shown in FIG. 8, first, the PU 62 acquires the vehicle velocity V (S70). Next, the PU 62 selects the dead band width αi corresponding to the vehicle velocity V acquired by the process of S70 (S72). For example, in the case where the vehicle velocity V is a value in the region A2, the PU 62 selects the dead band width α2.

Next, the PU 62 assigns a value resulting from adding a value resulting from subtracting the last value "θh(n-1)" of the steering angle θh from the current value "θh(n)" of the steering angle θh, to the last value "Δα(n-1)" of the in-dead-band position Δα, to a provisional position X (S74). Next, the PU 62 determines whether the provisional position X is equal to or more than "(-1) • αi/2" and is equal to or less than "αi/2" (S76). This process is a process of determining whether the combination of the steering angle θh and the turning angle θt is in the dead band region. In the case where the PU 62 determines that the provisional position X is equal to or more than "(-1) • αi/2" is equal to or less than "αi/2" (S76: YES), the PU 62 assigns the provisional position X to the dead band position Δα (S77).

On the other hand, in the case where the PU 62 makes the negative determination in the process of S76, the PU 62 determines whether the provisional position X is larger than "αi/2" (S78). In the case where the PU 62 determines that the provisional position X is larger than "αi/2" (S78: YES), the PU 62 assigns "αi/2" to the in-dead-band position Δα (S80). On the other hand, in the case where the PU 62 determines that the provisional position X is less than "αi/2" (S78: NO), the PU 62 assigns "(-1) • αi/2" to the in-dead-band position Δα (S82).

In the case where the PU 62 completes the process of S77, S80, or S82, the PU 62 ends the sequence of processes shown in FIG. 8 once.

### Dead Band Compensation Torque Calculation Process M14

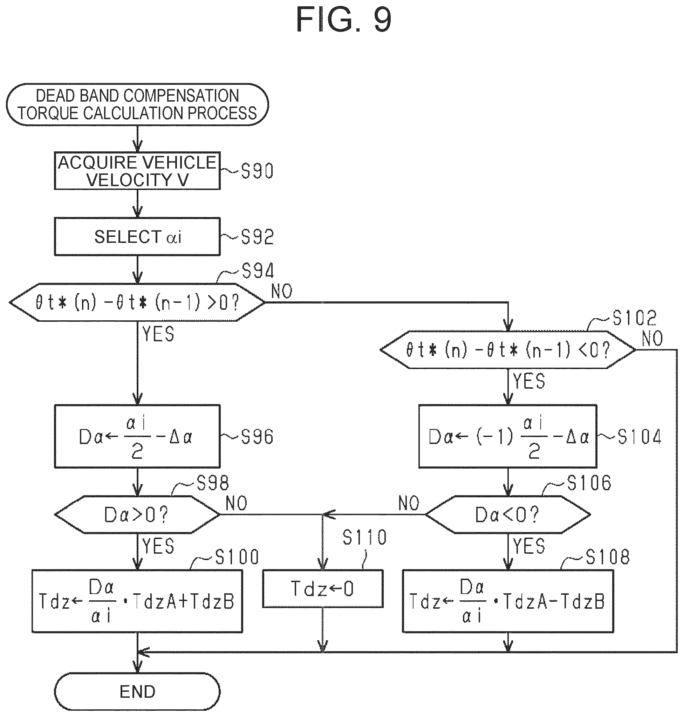

FIG. 9 shows a procedure of the dead band compensation torque calculation process M14. Processes shown in FIG. 9 are realized when the PU 62 repeatedly executes programs stored in the storage device 64, for example, with a predetermined period.

In the sequence of processes shown in FIG. 9, first, the PU 62 acquires the vehicle velocity V (S90). Next, the PU 62 selects the dead band width αi corresponding to the vehicle velocity V selected by the process of S90 (S92).

The PU 62 determines whether a value resulting from subtracting the last value "θt*(n-1)" of the target turning angle θt* from the current value "θt*(n)" of the target turning angle θt* is positive (S94). This process is a process of determining whether the steering direction is the right-turn direction. In the case where the PU 62 determines whether the above value resulting from the subtraction is positive (S94: YES), the PU 62 assigns a value resulting from subtracting the in-dead-band position Δα from "1/2" of the dead band width αi selected by the process of S92, to a dead band amount Dα (S96). The dead band amount Dα by the process of S96 is a maximal amount in which the turning angle θt does not change when the steering angle θh is changed in the right-turn direction.

Next, the PU 62 determines whether the dead band amount Dα is larger than zero (S98). In the case where the PU 62 determines that the dead band amount Dα is larger than zero (S98: YES), the PU 62 assigns the sum of a value resulting from adding a prescribed torque TdzA to a value resulting from dividing the dead band amount Dα by the dead band width αi and an offset amount TdzB, to a dead band compensation torque Tdz (S100).

On the other hand, in the case where the PU 62 makes the negative determination in the process of S94, the PU 62 determines whether the value resulting from subtracting the last value "θt*(n-1)" of the target turning angle θt* from the current value "θt*(n)" of the target turning angle θt* is negative (S102). This process is a process of determining whether the steering direction is the left-turn direction. In the case where the PU 62 determines that the above value resulting from the subtraction is negative (S102: YES), the PU 62 assigns a value resulting from subtracting the in-dead-band position Δα from "-1/2" of the dead band width αi selected by the process of S92, to the dead band amount Dα (S104). The absolute value of the dead band amount Dα by the process of S104 is a maximal amount in which the turning angle θt does not change when the steering angle θh is changed in the left-turn direction, and the maximal amount means the maximum of the absolute value. Here, the dead band amount Dα is equal to or less than zero.

In the case where the PU 62 determines that the dead band amount Dα is smaller than zero (S106: YES), the PU 62 assigns a value resulting from subtracting the offset amount TdzB from the value resulting from adding the prescribed torque TdzA to the value resulting from dividing the dead band amount Dα by the dead band width αi, to the dead band compensation torque Tdz (S108).

On the other hand, in the case where the PU 62 makes the negative determination in the process of S98 or S106, the PU 62 assigns "0" to the dead band compensation torque Tdz (S110). In the case where the PU 62 completes the process of S100, S108, or S110 or in the case where the PU 62 makes the negative determination in the process of S102, the PU 62 ends the sequence of processes shown in FIG. 9 once.

### Operation and Effect of Embodiment

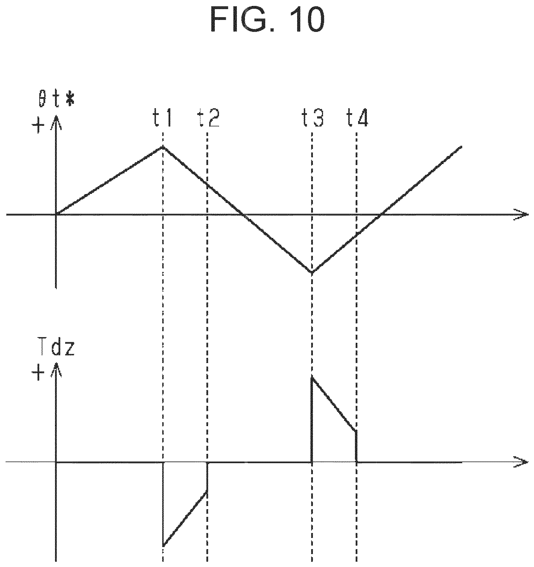

FIG. 10 shows an example of the transition of the dead band compensation torque Tdz according to the embodiment. As shown in FIG. 10, at time t1 when the PU 62 determines that the steering direction has changed from the right-turn direction to the left-turn direction based on the target turning angle θt*, the PU 62 sets the dead band compensation torque Tdz to a torque for the left turn. In FIG. 10, it is assumed that the turning angle θt is not in the dead band region immediately before time t1. Therefore, the dead band amount Dα at time t1 is "-αi". Therefore, at time t1, the PU 62 changes the dead band compensation torque Tdz from "0" to "-TdzA - TdzB" in a stepwise manner. Then, the PU 62 gradually decreases the magnitude of the dead band compensation torque Tdz, until the dead band amount Dα becomes zero. At time t2 when the dead band amount Dα becomes zero, the PU 62 changes the dead band compensation torque Tdz from "-TdzB" to "0" in a stepwise manner.

Thereafter, at time t3 when the PU 62 determines that the steering direction has changed from the left-turn direction to the right-turn direction based on the target turning angle θt*, the PU 62 sets the dead band compensation torque Tdz to a torque for the right turn. The dead band amount Dα at time t3 is "αi". Therefore, at time t3, the PU 62 changes the dead band compensation torque Tdz from "0" to "TdzA + TdzB" in a stepwise manner. Then, the PU 62 gradually decreases the magnitude of the dead band compensation torque Tdz, until the dead band amount Dα becomes zero. A time t4 when the dead band amount Dα becomes zero, the PU 62 changes the dead band compensation torque Tdz from "TdzB" to "0" in a stepwise manner.

In this way, in the case where the turning angle θt is in the dead band region, the PU 62 controls the torque of the motor 50, using the dead band compensation torque Tdz as the manipulated variable for the feedforward control. Therefore, it is possible to enhance the responsiveness of the turning angle θt, compared to the case where the torque of the motor 50 is controlled using only the feedback manipulated variable Tfb.

Particularly, the dead band compensation torque Tdz is a manipulated variable for the feedforward control, and therefore, the torque command value Trq* is easily designed to an appropriate amount, compared to the case of the coping by correcting the target turning angle θt* when the turning angle θt is in the dead band region.

In the above-described embodiment, the following operations and effects are further obtained.

(1-1) The dead band compensation torque Tdz is set depending on the value resulting from dividing the dead band amount Dα by the dead band width αi. Thereby, it is possible to cause the maximum of the absolute value of the dead band compensation torque Tdz to be constant, regardless of the magnitude of the dead band width αi

(1-2) The PU 62 determines the steering direction depending on the change direction of the target turning angle θt*. Thereby, it is possible to enhance the controllability of the turning angle θt depending on the steering direction that is intended by the high-order ECU 80.

(1-3) The PU 62 estimates the turning angle θt using the stiffness coefficient ki depending on the vehicle velocity V. Thereby, it is possible to set the stiffness coefficient ki to an appropriate value depending on the vehicle velocity V, and it is possible to enhance the accuracy of the estimation of the turning angle θt.

(1-4) The PU 62 learns the dead band width αi depending on the vehicle velocity V. Thereby, it is possible to calculate the in-dead-band position Δα with higher accuracy, compared to the case where the dead band width αi is a value that does not depend on the vehicle velocity V.

### Second Embodiment

A second embodiment will be described below with reference to the drawings, with a focus on differences from the first embodiment.

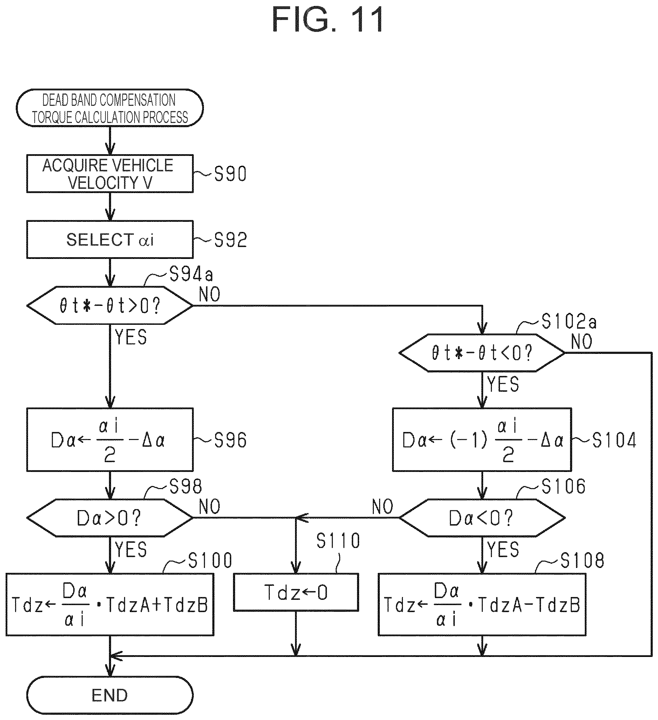

FIG. 11 shows a procedure of a dead band compensation torque calculation process M14 according to the second embodiment. Processes shown in FIG. 11 are realized when the PU 62 repeatedly executes programs stored in the storage device 64, for example, with a predetermined period. In the processes shown in FIG. 11, processes corresponding to processes shown in FIG. 9 are denoted by identical step numbers, for convenience sake.

In the sequence of processes shown in FIG. 11, in the case where the PU 62 completes the process of S92, the PU 62 determines whether a value resulting from subtracting the turning angle θt from the target turning angle θt* is positive (S94a). The process of S94a is a process of determining whether the steering direction is the right-turn direction. In the case where the PU 62 determines that the above value resulting from the subtraction is positive (S94a: YES), the PU 92 transitions to the process of S96.

On the other hand, in the case where the PU 62 determines that the above value resulting from the subtraction is equal to or less than zero (S94a: NO), the PU 62 determines whether the value resulting from subtracting the turning angle θt from the target turning angle θt* is negative (S102a). The process of S102a is a process of determining whether the steering direction is the left-turn direction. In the case where the PU 62 determines that the above value resulting from the subtraction is negative (S102a: YES), the PU 62 transitions to the process of S104. On the other hand, in the case where the PU 62 makes the negative determination in the process of S102a, the PU 62 ends the sequence of processes shown in FIG. 11 once.

### Correspondence Relation

The correspondence relation between matters in the above embodiments and matters described in "SUMMARY OF THE INVENTION" is shown as follows. The in-dead-band position calculation process M20 and the processes of S92 to S96, S102, and S104 constitute an example of the dead band amount calculation process. Further, the in-dead-band position calculation process M20 and the processes of S92, S94a, S96, S102a, and S104 constitute an example of the dead band amount calculation process. The dead band compensation torque calculation process M14 and the addition process M16 constitute an example of the superposition process. The processes of S72 and S92 constitute examples of the dead band width selection process. The processes of S94 and S102 constitute an example of the steering direction determination process. The processes of S94a and S102a constitute an example of the steering direction determination process. The feedback process M10 and the manipulated signal generation process M18 constitute an example of the turning process. The process of S62 constitutes an example of the stiffness coefficient selection process. The processes of S64 and S66 constitute an example of the turning angle acquisition process.

### Other Embodiments

The embodiments can be carried out while being modified as follows. The embodiments and the following modifications can be carried out while being combined with each other as long as there is no technical inconsistency.

### Dead Band Compensation Torque Calculation Process

In the dead band compensation torque calculation process, the dead band compensation torque Tdz does not need to be calculated using the offset amount TdzB.

In the dead band compensation torque calculation process, the dead band compensation torque Tdz does not need to be calculated as a value proportional to the value resulting from dividing the dead band amount Dα by the dead band width αi. For example, in the dead band compensation torque calculation process, the dead band compensation torque Tdz may be calculated as a value proportional to the square of the above value resulting from the division.

The dead band compensation torque calculation process does not need to be a process of calculating the value resulting from inputting the above value resulting from the division, to the elementary function. For example, the dead band compensation torque calculation process may be a process in which the PU 62 performs the map computation of the dead band compensation torque Tdz in a state where map data is previously stored in the storage device 64. In that case, the relation between the value resulting from the division and the dead band compensation torque Tdz can be adjusted to an arbitrary relation that cannot be expressed by the elementary function.

Even in that case, the dead band compensation torque calculation process may be a process of altering the dead band compensation torque Tdz depending on the dead band amount Dα, under the following condition. The condition is a condition that the magnitude of the dead band compensation torque Tdz when the magnitude of the dead band amount Dα is large is equal to or more than the magnitude of the dead band compensation torque Tdz when the magnitude of the dead band amount Dα is small.

In the description "altering B depending on A on condition that B when A is large is equal to or more than B when A is small", "when A is large" and "when A is small" mean relative magnitude relations when both cases are compared. For example, "when A is large" corresponds to "when A is a first value", and "when A is small" corresponds to "when A is a second value smaller than the first value". Moreover, the above description means that B when the A is the first value can be larger than B when A is the second value depending on the settings of the first value and the second value. Further, the above description means that B is altered depending on A such that A when B is large is larger than A when B is small.

Incidentally, in the map data, the value resulting from the division may be adopted as an input variable. Alternatively, the dead band amount Dα and the dead band width αi may be adopted as input variables.

In the dead band compensation torque calculation process, the dead band compensation torque Tdz does not need to be calculated in consideration of the dead band width αi. For example, the dead band compensation torque calculation process may be a process of calculating the dead band compensation torque Tdz based on the dead band amount Dα, without referring to the dead band width αi.

### In-Dead-Band Position Calculation process

The in-dead-band position calculation process M20 does not need to be a process of calculating the in-dead-band position Δα using the dead band width αi depending on the vehicle velocity. For example, a process of calculating the in-dead-band position Δα using a single dead band width that does not depend on the vehicle velocity may be adopted.

### Turning Angle θt

The turning angle estimation process M12 does not need to be a process of estimating the turning angle using the stiffness coefficient ki that has been learned depending on the vehicle velocity V. For example, a process of estimating the turning angle using the stiffness coefficient ki that does not depend on the vehicle velocity may be adopted.

The turning angle θt as the controlled variable for the feedback control does not need to be an estimated value. For example, the turning angle θt may be a detected value of a sensor that detects the turning angle.

### Torque Control of Motor

A drive circuit of the motor 50 does not need to be operated depending on the manipulated variable for the control in which the turning angle is the controlled variable and the target value of the turning angle is the target value of the controlled variable. For example, the drive circuit of the motor 50 may be operated depending on a manipulated variable for a feedforward control that depends on a target value. In that case, in the dead band, the PU 62 may superpose the dead band compensation torque Tdz on a manipulated variable for a feedforward control that is calculated even outside of the dead band region.

### Autonomous Driving Mode

In the autonomous driving mode, the sensing member that is used for acquiring the information about the exterior of the vehicle that include lanes is not limited to the camera 82. For example, a LIDAR may be used.

### Traveling Mode

The traveling mode in which the dead band compensation torque Tdz is superposed on the torque of the motor 50 is not limited to the autonomous driving mode. For example, a manual driving mode that is a mode in which the steering by the driver is executed may be adopted. In that case, for example, in the processes of S94 and S102, the steering angle θh only needs to be employed instead of the target turning angle θt*.

### Steering Control Device

The high-order ECU 80 and the steering control device 60 may be integrally configured. The steering control device is not limited to a device that executes software processing. For example, a dedicated hardware circuit that executes at least some of the processes that are executed in the above embodiment, as exemplified by an ASIC, may be included. That is, the steering control circuit only needs to include a processing circuit that has one configuration of the following (a) to (c).
(a) A processing circuit including a processing device that executes all of the above processes in accordance with programs and a program storing device that stores programs, as exemplified by a storage device.
(b) A processing circuit including a processing device that executes some of the above processes in accordance with programs, a program storing device, and a dedicated hardware circuit that executes the other processes.
(c) A processing circuit including a dedicated hardware circuit that executes all of the above processes.

A plurality of software execution devices each of which includes a processing device and a program storing device may be provided. Further, a plurality of dedicated hardware circuits may be provided.

## Claims

1. A steering control device (60) that controls a steering device (10),
the steering device (10) comprising:
a steering shaft (14);
a turning wheel (40) of a vehicle, the turning wheel (40) turning with rotation of the steering shaft (14);
a motor (50) configured to rotate the steering shaft (14); **characterized by**
a processor (62) configured to execute a dead band amount calculation process and a superposition process, wherein:
the dead band amount calculation process is a process of calculating a dead band amount using a steering angle as an input, the dead band amount being an amount by which the steering angle changes while the turning wheel (40) does not turn in a steering direction;
the steering angle is a rotation angle of the steering shaft (14);
the superposition process is a process of superposing a dead band compensation torque on a torque of the motor (50), when a magnitude of the dead band amount is larger than zero; and
the dead band compensation torque is a torque that increases the torque of the motor (50) in a direction in which the turning wheel (40) turns depending on the rotation of the steering shaft (14).

2. The steering control device (60) according to claim 1, **characterized in that**:
the superposition process includes a dead band compensation torque calculation process; and
the dead band compensation torque calculation process is a process of altering a magnitude of the dead band compensation torque depending on the dead band amount, on condition that the magnitude of the dead band compensation torque when the magnitude of the dead band amount is large is equal to or more than the magnitude of the dead band compensation torque when the magnitude of the dead band amount is small.

3. The steering control device (60) according to claim 2, further comprising a storage device (64) in which a dead band width is stored for each of different vehicle velocities from each other, the dead band width being an amount by which the steering angle changes after a rotation direction of the steering shaft (14) switches from one of a right-turn direction and a left-turn direction to the other of the right-turn direction and the left-turn direction and before the turning wheel (40) turns, **characterized in that**:
the dead band compensation torque calculation process includes a dead band width selection process;
the dead band width selection process is a process of selecting the dead band width that is of a plurality of the dead band widths stored in the storage device (64) depending on the vehicle velocities and that corresponds to the vehicle velocity; and
the dead band compensation torque calculation process is a process of altering the magnitude of the dead band compensation torque depending on a ratio of the dead band amount to the dead band width selected by the dead band width selection process, on condition that the magnitude of the dead band compensation torque when a magnitude of the ratio is large is equal to or more than the magnitude of the dead band compensation torque when the magnitude of the ratio is small.

4. The steering control device (60) according to claim 1, **characterized in that**:
the dead band amount calculation process includes a steering direction determination process;
the steering direction determination process is a process of determining whether the steering direction is a right-turn direction or a left-turn direction, based on a change direction of a target value of a turning angle; and
the dead band amount calculation process is a process of calculating the dead band amount in accordance with the steering direction determined by the steering direction determination process.

5. The steering control device (60) according to claim 1, **characterized in that**:
the dead band amount calculation process includes a steering direction determination process;
the steering direction determination process is a process of determining whether the steering direction is a right-turn direction or a left-turn direction, based on a sign of a difference between a target value of a turning angle and the turning angle; and
the dead band amount calculation process is a process of calculating the dead band amount in accordance with the steering direction determined by the steering direction determination process.

6. The steering control device (60) according to claim 1, **characterized in that**:
the processor (62) is configured to execute a turning process;
the turning process is a process of manipulating the torque of the motor (50) depending on a manipulated variable for a feedback control in which a turning angle of the turning wheel (40) is a controlled variable and a target value of the turning angle is a target value of the controlled variable; and
the superposition process is a process of superposing the dead band compensation torque on a torque depending on the manipulated variable.

7. The steering control device (60) according to claim 6, further comprising a storage device (64) in which a stiffness coefficient is stored for each of different vehicle velocities from each other, the stiffness coefficient being a ratio of the turning angle to the steering angle, **characterized in that**:
the processor (62) is configured to execute a stiffness coefficient selection process and a turning angle acquisition process;
the stiffness coefficient selection process is a process of selecting the stiffness coefficient that is of a plurality of the stiffness coefficients stored in the storage device (64) depending on the vehicle velocities and that corresponds to the vehicle velocity; and
the turning angle acquisition process is a process of calculating an estimated value of the turning angle as the controlled variable, using a detected value of the steering angle and the stiffness coefficient selected by the stiffness coefficient selection process.

## Patentansprüche

1. Lenksteuerungsvorrichtung (60), die eine Lenkvorrichtung (10) steuert,
wobei die Lenkvorrichtung (10) aufweist:
eine Lenkwelle (14);
ein Drehrad (40) eines Fahrzeugs, wobei sich das Drehrad (40) mit einer Rotation der Lenkwelle (14) dreht;
einen Motor (50), der konfiguriert ist, um die Lenkwelle (14) zu drehen; **gekennzeichnet durch**
einen Prozessor (62), der konfiguriert ist, um einen Totzonenbetrag-Berechnungsprozess und einen Überlagerungsprozess auszuführen, wobei:
der Totzonenbetrag-Berechnungsprozess ein Prozess zum Berechnen eines Totzonenbetrags unter Verwendung eines Lenkwinkels als eine Eingabe ist, wobei der Totzonenbetrag ein Betrag ist, um den sich der Lenkwinkel ändert, während sich das Drehrad (40) nicht in eine Lenkrichtung dreht;
der Lenkwinkel ein Rotationswinkel der Lenkwelle (14) ist;
der Überlagerungsprozess ein Prozess zum Überlagern eines Totzonen-Kompensationsdrehmoments auf ein Drehmoment des Motors (50) ist, wenn eine Größe des Totzonenbetrags größer als Null ist; und
das Totzonen-Kompensationsdrehmoment ein Drehmoment ist, das das Drehmoment des Motors (50) in eine Richtung, in die sich das Drehrad (40) dreht, abhängig von der Rotation der Lenkwelle (14) erhöht.

2. Lenksteuerungsvorrichtung (60) nach Anspruch 1, **dadurch gekennzeichnet, dass**:
der Überlagerungsprozess einen Totzonen-Kompensationsdrehmoment-Berechnungsprozess enthält; und
der Totzonen-Kompensationsdrehmoment-Berechnungsprozess ein Prozess zum Ändern einer Größe des Totzonen-Kompensationsdrehmoments abhängig von dem Totzonenbetrag ist, unter der Bedingung, dass die Größe des Totzonen-Kompensationsdrehmoments, wenn die Größe des Totzonenbetrags groß ist, gleich der Größe des Totzonen-Kompensationsdrehmoments oder größer als diese ist, wenn die Größe des Totzonenbetrags klein ist.

3. Lenksteuerungsvorrichtung (60) nach Anspruch 2, die des Weiteren eine Speichervorrichtung (64) aufweist, in der eine Totzonenbreite für jede von verschiedenen Fahrzeuggeschwindigkeiten voneinander gespeichert ist, wobei die Totzonenbreite ein Betrag ist, um den sich der Lenkwinkel ändert, nachdem eine Rotationsrichtung der Lenkwelle (14) von einer der Abbiegerichtungen, Rechtsabbiegerichtung und Linksabbiegerichtung, zu der anderen der Abbiegerichtungen, Rechtsabbiegerichtung und Linksabbiegerichtung, wechselt und bevor sich das Drehrad (40) dreht, **dadurch gekennzeichnet, dass**:
der Totzonen-Kompensationsdrehmoment-Berechnungsprozess einen Totzonenbreiten-Auswahlprozess enthält;
der Totzonenbreiten-Auswahlprozess ein Prozess zum Auswählen der Totzonenbreite ist, die eine von einer Vielzahl der Totzonenbreiten ist, die in der Speichervorrichtung (64) gespeichert sind, abhängig von den Fahrzeuggeschwindigkeiten, und die der Fahrzeuggeschwindigkeit entspricht; und
der Totzonen-Kompensationsdrehmoment-Berechnungsprozess ein Prozess zum Ändern der Größe des Totzonen-Kompensationsdrehmoments abhängig von einem Verhältnis des Totzonenbetrags zu der Totzonenbreite ist, die durch den Totzonenbreiten-Auswahlprozess ausgewählt wird, unter der Bedingung, dass die Größe des Totzonen-Kompensationsdrehmoments, wenn eine Größe des Verhältnisses groß ist, gleich der Größe des Totzonen-Kompensationsdrehmoments oder größer als diese ist, wenn die Größe des Verhältnisses klein ist.

4. Lenksteuerungsvorrichtung (60) nach Anspruch 1, **dadurch gekennzeichnet, dass**:
der Totzonenbetrag-Berechnungsprozess einen Lenkrichtungs-Bestimmungsprozess enthält;
der Lenkrichtungs-Bestimmungsprozess ein Prozess zum Bestimmen ist, ob die Lenkrichtung eine Abbiegerichtung nach rechts oder eine Abbiegerichtung nach links ist, basierend auf einer Änderungsrichtung eines Zielwerts eines Drehwinkels; und
der Totzonenbetrag-Berechnungsprozess ein Prozess zum Berechnen des Totzonenbetrags gemäß der Lenkrichtung ist, die durch den Lenkrichtungs-Bestimmungsprozess bestimmt wird.

5. Lenksteuerungsvorrichtung (60) nach Anspruch 1, **dadurch gekennzeichnet, dass**:
der Totzonenbetrag-Berechnungsprozess einen Lenkrichtungs-Bestimmungsprozess enthält;
der Lenkrichtungs-Bestimmungsprozess ein Prozess zum Bestimmen ist, ob die Lenkrichtung eine Abbiegerichtung nach rechts oder eine Abbiegerichtung nach links ist, basierend auf einem Vorzeichen einer Differenz zwischen einem Zielwert eines Drehwinkels und dem Drehwinkel; und
der Totzonenbetrag-Berechnungsprozess ein Prozess zum Berechnen des Totzonenbetrags gemäß der Lenkrichtung ist, die durch den Lenkrichtungs-Bestimmungsprozess bestimmt wird.

6. Lenksteuerungsvorrichtung (60) nach Anspruch 1, **dadurch gekennzeichnet, dass**:
der Prozessor (62) konfiguriert ist, um einen Drehprozess auszuführen;
der Drehprozess ein Prozess zum Handhaben des Drehmoments des Motors (50) abhängig von einer Stellgröße für eine Regelung ist, in der ein Drehwinkel des Drehrads (40) eine gesteuerte Variable ist und ein Zielwert des Drehwinkels ein Zielwert der gesteuerten Variablen ist; und
der Überlagerungsprozess ein Prozess zum Überlagern des Totzonen-Kompensationsdrehmoments auf ein Drehmoment abhängig von der Stellgröße ist.

7. Lenksteuerungsvorrichtung (60) nach Anspruch 6, die des Weiteren eine Speichervorrichtung (64) aufweist, in der ein Steifigkeitskoeffizient für jede von verschiedenen Fahrzeuggeschwindigkeiten voneinander gespeichert ist, wobei der Steifigkeitskoeffizient ein Verhältnis des Drehwinkels zu dem Lenkwinkel ist, **dadurch gekennzeichnet, dass**:
der Prozessor (62) konfiguriert ist, um einen Steifigkeitskoeffizient-Auswahlprozess und einen Drehwinkel-Erlangungsprozess auszuführen;
der Steifigkeitskoeffizient-Auswahlprozess ein Prozess zum Auswählen des Steifigkeitskoeffizienten ist, der einer von einer Vielzahl der Steifigkeitskoeffizienten ist, die in der Speichervorrichtung (64) gespeichert sind, abhängig von den Fahrzeuggeschwindigkeiten, und der der Fahrzeuggeschwindigkeit entspricht; und
der Drehwinkel-Erlangungsprozess ein Prozess zum Berechnen eines geschätzten Werts des Drehwinkels als die gesteuerte Variable ist, unter Verwendung eines erfassten Werts des Lenkwinkels und des Steifigkeitskoeffizienten, der durch den Steifigkeitskoeffizient-Auswahlprozess ausgewählt wird.

## Revendications

1. Dispositif de commande de direction (60) qui commande un dispositif de direction (10),
le dispositif de direction (10), comprenant :
un arbre de direction (14) ;
une roue tournante (40) d'un véhicule, la roue tournante (40) tournant avec la rotation de l'arbre de direction (14) ;
un moteur (50) configuré pour faire tourner l'arbre de direction (14) ; **caractérisé par**
un processeur (62) configuré pour exécuter un processus de calcul de la quantité de bande morte et un processus de superposition, dans lequel :
le processus de calcul de la quantité de bande morte est un processus de calcul d'une quantité de bande morte utilisant un angle de direction comme entrée, la quantité de bande morte étant une quantité selon laquelle l'angle de direction change alors que la roue tournante (40) ne tourne pas dans un sens de direction ;
l'angle de braquage est un angle de rotation de l'arbre de direction (14) ;
le processus de superposition est un processus de superposition d'un couple de compensation de bande morte sur un couple du moteur (50), lorsqu'une amplitude de la bande morte est supérieure à zéro ; et
le couple de compensation de bande morte est un couple qui augmente le couple du moteur (50) dans un sens dans lequel la roue tournante (40) tourne en fonction de la rotation de l'arbre de direction (14).

2. Dispositif de commande de direction selon la revendication 1, **caractérisé en ce que** :
le processus de superposition inclut un processus de calcul du couple de compensation de bande morte ; et
le processus de calcul du couple de compensation de bande morte est un processus qui modifie une amplitude du couple de compensation de bande morte en fonction de la quantité de bande morte, à condition que l'amplitude du couple de compensation de bande morte lorsque l'amplitude de la quantité de bande morte est grande soit égale ou supérieure à l'amplitude du couple de compensation de bande morte lorsque l'amplitude de la quantité de bande morte est faible.

3. Dispositif de commande de direction (60) selon la revendication 2, comprenant en outre un dispositif de stockage (64) dans lequel une largeur de bande morte est enregistrée pour chacune des vitesses différentes du véhicule, la largeur de bande morte étant une quantité selon laquelle l'angle de direction change après le passage d'un sens de rotation de l'arbre de direction (14) d'un sens de virage à droite et d'un sens de virage à gauche à l'autre du sens de virage à droite et du sens de virage à gauche, et avant que la roue tourne (40), **caractérisé en ce que** :
le processus de calcul du couple de compensation de bande morte inclut un processus de sélection de la largeur de bande morte ;
le processus de sélection de la largeur de bande morte est un processus de sélection de la largeur de bande morte parmi une pluralités de largeurs de bande morte stockées dans le dispositif de stockage (64), en fonction des vitesses du véhicule et qui correspond à la vitesse du véhicule ; et
le processus de calcul du couple de compensation de bande morte est un processus qui modifie l'amplitude du couple de compensation de bande morte en fonction d'un rapport entre la quantité de bande morte et la largeur de la bande morte sélectionnée par le processus de sélection de la largeur de bande morte, à condition que l'amplitude du couple de compensation de bande morte lorsqu'une amplitude du rapport est grande soit égale ou supérieure à l'amplitude du couple de compensation de bande morte lorsque l'amplitude du rapport est faible.

4. Dispositif de commande de direction selon la revendication 1, **caractérisé en ce que** :
le processus de calcul de la quantité de bande morte inclut un processus de détermination du sens de direction ;
le processus de détermination du sens de direction est un processus permettant de déterminer si le sens de direction est un sens de virage à droite ou un sens de virage à gauche, sur la base d'un sens de changement d'une valeur cible selon un angle de braquage ;
le processus de calcul de la quantité de bande morte est un processus de calcul de la quantité de bande morte conformément au sens de direction déterminé par le processus de détermination du sens de direction.

5. Dispositif de commande de direction selon la revendication 1, **caractérisé en ce que** :
le processus de calcul de la quantité de bande morte inclut un processus de détermination du sens de direction ;
le processus de détermination du sens de direction est un processus permettant de déterminer si le sens de direction est un sens de virage à droite ou un sens de virage à gauche, sur la base d'un signe d'une différence entre une valeur cible d'un angle de braquage et l'angle de braquage ;
le processus de calcul de la quantité de bande morte est un processus de calcul de la quantité de bande morte conformément au sens de direction déterminé par le processus de détermination du sens de direction.

6. Dispositif de commande de direction selon la revendication 1, **caractérisé en ce que** :
le processeur (62) est configuré pour exécuter un processus de rotation ;
le processus de rotation est un processus de manipulation du couple du moteur (50) en fonction d'une variable manipulée pour une commande par rétroaction dans laquelle un angle de rotation de la roue tournante (40) est une variable contrôlée et une valeur cible de l'angle de braquage est une valeur cible de la variable contrôlée ; et
le processus de superposition est un processus de superposition du couple de compensation de zone morte sur un couple dépendant de la variable manipulée.

7. Dispositif de commande de direction (60) selon la revendication 6, comprenant en outre un dispositif de stockage (64) dans lequel un coefficient de rigidité est stocké pour chacune des vitesses différentes du véhicule, le coefficient de rigidité étant un rapport de l'angle de braquage à l'angle de direction, **caractérisé en ce que** :
le processeur (62) est configuré pour exécuter un processus de sélection du coefficient de rigidité et un processus d'acquisition de l'angle de braquage ;
le processus de sélection du coefficient de rigidité est un processus de sélection du coefficient de rigidité parmi une pluralité des coefficients de rigidité stockés dans le dispositif de stockage (64), en fonction des vitesses du véhicule et qui correspond à la vitesse du véhicule ; et
le processus d'acquisition de l'angle de braquage est un processus de calcul d'une valeur estimée de l'angle de braquage en tant que variable contrôlée, en utilisant une valeur détectée de l'angle de direction et le coefficient de rigidité sélectionné par le processus de sélection du coefficient de rigidité.
